# EUROPÄISCHE PATENTSCHRIFT

(11) **EP 2 820 401 B1**
(45) Veröffentlichungstag und Bekanntmachung des Hinweises auf die Patenterteilung: **06.01.2016**
(21) Anmeldenummer: 13707305.2
(22) Anmeldetag: 14.02.2013
(51) Int. Cl.: G01N 25/48

(54) **VORRICHTUNG UND VERFAHREN ZUR KALORIMETRISCHEN VERMESSUNG VON SORPTIONSVORGÄNGEN**
DEVICE AND METHOD FOR CALORIMETRICALLY MEASURING SORPTION PROCESSES
DISPOSITIF ET PROCÉDÉ DE MESURE CALORIMÉTRIQUE DE PROCESSUS DE SORPTION

(30) Priorität: 28.02.2012 DE 102012101621
(43) Veröffentlichungstag der Anmeldung: 07.01.2015
(73) Patentinhaber: Rubotherm GmbH, 44801 Bochum (DE)
(72) Erfinder: BATHEN, Dieter, 47058 Duisburg (DE); HAYN, Tatjana, 47053 Duisburg (DE); WILL, Cornelia, 44801 Bochum (DE); DREISBACH, Frieder, 58456 Witten (DE)
(74) Vertreter: Kalkoff & Partner
(86) Internationale Anmeldenummer: PCT/EP2013/052998
(87) Internationale Veröffentlichungsnummer: WO 2013/127642

(56) Entgegenhaltungen:
- DE-U1- 20 011 022
- US-A- 4 761 078

## Beschreibung

Die Erfindung betrifft eine Vorrichtung und ein Verfahren zur kalorimetrischen Vermessung von Sorptionsvorgängen.

Zur energetischen Charakterisierung von Adsorbentien an einer Gas-Feststoff-Grenzfläche ist es hilfreich neben den Sorptionsisothermen zusätzlich die integralen bzw. differentiellen Sorptionsenthalpien der eingesetzten Gas-Feststoff-Systeme zu kennen. Besonders bei technischen Sorptions-Prozessen, die in der Gasphase fast ausnahmslos nicht-isotherm ablaufen, ist diese Kenntnis der Sorptionswärmen wertvoll, da technische Adsorber aufgrund des relativ kleinen Oberfläche-zu-Volumen-Verhältnisses quasi-adiabate Systeme darstellen.

Kalorimeter können im Wesentlichen auf zwei verschiedenen Messverfahren basieren. Zum einen können diese nach dem Kompensationsprinzip arbeiten, bei dem die zu messende Wärmetönung durch eine aktive Beheizung bzw. Kühlung kompensiert und die dazu notwendige Leistung detektiert wird. Zum anderen kann das Austauschprinzip zugrunde liegen, bei dem der durch die Wärmetönung erzeugte Wärmefluss zu einer Temperaturänderung zwischen Probe und Umgebung führt, welche detektiert wird.

Kommerziell verfügbar sind bisher zum einen Mikrokalorimeter, die typischerweise mit einer einzelnen Probenzelle ausgestattet sind, und zum anderen dynamische Differenzkalorimeter (DSC), die mit einer Proben- und einer parallel angeordneten Referenzzelle betrieben werden. Beide Arten von Kalorimetern sind aus technischen und wirtschaftlichen Gründen nicht für die simultane Vermessung von Sorptionsisothermen und Sorptionsenthalpie verwendbar.

In der Fachliteratur finden sich vereinzelt Sorptionskalorimeter wissenschaftlicher Arbeitsgruppen, bei denen es sich ausnahmslos um hochschulintern selbst entwickelte und aufgebaute Apparaturen für Laborversuche in der universitären Forschung handelt. Generell unterscheiden lassen sich dabei Apparaturen für die Grundlagenforschung, z.B. zur Untersuchung von Bindungsenthalpien bei ausgesprochen geringer Oberflächenbelegung im Hochvakuum, und Apparaturen zur Messung von Sorption und Sorptionsenthalpie in verfahrenstechnisch relevanten Druck- und Temperaturbereichen. Der Aufbau letztgenannter Apparaturen ist hochgradig experimentell, ausgesprochen komplex und damit sehr teuer. Die Durchführung der Messungen mit diesen Apparaturen verläuft aufgrund des Aufbaus und des Funktionsprinzips dieser Apparaturen weitestgehend manuell, ist sehr umständlich und entsprechend arbeitsaufwändig.

Eine der größten Schwächen der gegenwärtig existierenden Apparaturen zur Messung von Sorption und Sorptionsenthalpie in verfahrenstechnisch relevanten Druck- und Temperaturbereichen ist, dass während des Messbetriebs Änderungen durch äußere Einflüsse, gerätespezifische Veränderungen sowie Wärmeeffekte, die durch die Änderung der Atmosphäre in den Messzellen hervorgerufen werden, nicht berücksichtigt werden können. Diese Wärmeeffekte können unter Anderem der Wärmeeintrag durch eine eventuell von der Messzelle verschiedene Temperatur der zugeführten gasförmigen Substanz oder die bei der Entspannung bzw. Komprimierung der gasförmigen Substanz in der Messzelle aufgenommene bzw. abgegebene Wärme sein. Auch basiert die Auswertung der mit diesen Messgeräten erhaltenen Daten auf vereinfachten Modellen und es müssen verschiedene Annahmen zu Änderungen der Atmosphäre im Inneren der Messzellen gemacht werden, was zu starken Beschränkungen bezüglich der Genauigkeit der erhaltenen Ergebnisse führt.

Des Weiteren mangelt es diesen Messgeräten an einer Möglichkeit einer zuverlässigen, schnellen und allgemein gültigen Kalibrierung, da bisher nur eine manuelle Kalibrierung möglich ist, wobei diese vor jeder einzelnen Messung durchgeführt werden muss. Diese Kalibrierung ist aufwändig und es können nur unter großem Aufwand reproduzierbare Werte mittels dieser Messgeräte erhalten werden, die allerdings selbst dann verglichen mit herkömmlichen Kalorimetrie-Messungen deutlich ungenauer und stark fehlerbehaftet sind.

In der DE 20011022 U1 ist eine Vorrichtung zur simultanen Messung von Gasaufnahmen und damit verbundenen Wärmetönungen beschrieben. Ein mit Gas befüllbares Probengefäß ist von einem flüssigkeitsgefüllten Mantel umgeben, dessen Druck und Druckänderung durch einen Druckmesser genau bestimmt werden können.

Der Erfindung liegt die Aufgabe zugrunde, eine kommerziell nutzbare und kostengünstige Vorrichtung sowie ein Verfahren bereit zu stellen, um in einfacher Weise eine Messung einer Sorptionsenthalpien durchführen zu können.

Die Aufgabe wird erfindungsgemäß durch eine Vorrichtung nach Anspruch 1 und durch ein Verfahren nach Anspruch 12 gelöst. Abhängige Ansprüche beziehen sich auf vorteilhafte Weiterbildungen der Erfindung.

Erfindungsgemäß umfasst die Vorrichtung zur kalorimetrischen Messung von Sorptionsvorgängen eine Messzelle zur Aufnahme einer Probe, hier bezeichnet als Sorptionszelle, wobei die Sorptionszelle ein Volumen zur Füllung mit einem Sorptionsgas aufweist und eine weitere Messzelle, hier bezeichnet als Referenzzelle, ebenfalls mit einem Volumen zur Füllung mit dem Sorptionsgas. Um die Sorptionszelle herum angeordnet ist ein Mess-Gasvolumen, das zur Aufnahme eines Referenzgases, beispielsweise Stickstoff, Luft, Kohlenstoffdioxid oder eines der Edelgase, vorgesehen ist. Ferner ist ein um die Referenzzelle herum angeordnetes Referenz-Gasvolumen ebenfalls zur Aufnahme des Referenzgases vorgesehen.

Des Weiteren umfasst die erfindungsgemäße Vorrichtung eine Gasverbindung zwischen der Sorptionszelle und der Referenzzelle, um Sorptionsgas in die Sorptionszelle und die Referenzzelle zu leiten, so dass sich in der Sorptionszelle eine Sorptionsreaktion mit der Probe ergeben kann. Weiterhin schließt die erfindungsgemäße Vorrichtung zur kalorimetrischen Messung eine Vorrichtung zur Differenzdruck-Messung zwischen dem Mess-Gasvolumen und dem Referenz-Gasvolumen ein, um während des Messvorgangs aus einer Volumenänderung des Referenzgases im Mess-Gasvolumen eine kalorimetrische Messung des Sorptionsvorgangs an der Probe in der Sorptionszelle durchzuführen.

Bei dem erfindungsgemäßen Verfahren zur kalorimetrischen Vermessung von Sorptionsvorgängen wird dazu zunächst eine Probe in eine Sorptionszelle gefüllt. Anschließend wird ein Sorptionsgas, dessen Sorption auf die Probe kalorimetrisch untersucht werden soll, in die Sorptionszelle und in eine mit dieser verbundene Referenzzelle geleitet, so dass sich in der Sorptionszelle eine Sorptionsreaktion mit der Probe ergibt, worauf eine kalorimetrische Messung des Sorptionsvorgangs durchgeführt wird.

Wird während der Messung in der Sorptionszelle nun in Folge einer Sorption an die Probe Wärme frei, so fließt diese in ein die Sorptionszelle umgebendes Mess-Gasvolumen und führt dort zu einer vorübergehenden Erwärmung des Gases. Die draus resultierende Druckerhöhung wird mittels einer Vorrichtung zur Differenzdruck-Messung im Vergleich zum Druck im Referenz-Gasvolumen gemessen. Die so ermittelte Druckdifferenz ist proportional zu der freiwerdenden Wärme während des Sorptionsvorgangs. Da sämtliche der Sorption nicht zugrunde liegenden Wärmeflüsse und Atmosphärenveränderungen nicht nur in der Sorptionszelle, sondern auch in der Referenzzelle auftreten, sind solche Effekte bei dem auf dem Differenzdruck beider Messzellen basierenden Verfahren intrinsisch vom erhaltenen Ergebnis ausgenommen.

Vorteilhaft gegenüber dem Stand der Technik ist die durch den Aufbau mit einer Sorptionszelle und einer Referenzzelle erreichbare vollständige Kompensation der die Messung überlagernden Effekte der Atmosphäre bzw. der Änderungen der Atmosphäre während der Messung, was zu einer deutlich erhöhten Messgenauigkeit führt. Dabei ist der Aufwand für die Messung vergleichbar zu einer herkömmlichen kalorimetrischen Messung.

Weiterhin vorteilhaft ist, dass das Messverfahren auf der Erfassung von Druckdifferenzen zwischen den Gasvolumina beruht und nicht wie im Stand der Technik auf der Messung von Temperaturen, Temperaturdifferenzen oder Heizleistungen basiert, wodurch eine weitere signifikante Steigerung der Messgenauigkeit erreicht wird.

Die erfindungsgemäße Vorrichtung zur kalorimetrischen Messung von Sorptionsvorgängen umfasst zwei Messzellen, eine Sorptionszelle und eine Referenzzelle. Sowohl die Messzellen als auch die Gasverbindung zwischen den Messzellen sind aus einem gasdichten Material aufgebaut, das in einer vorteilhaften Ausführungsform der Erfindung sich chemisch inert gegenüber dem eingeleiteten Sorptionsgas sowie gegenüber der Probe verhält, um chemische Reaktionen des Referenzgases zu verhindern, was zu einer Atmosphärenänderung, zu weiteren Wärmeflüssen und zur Veränderung der chemischen Zusammensetzung des Sorptionsgases führen würde.

Dabei ist für beide Messzellen ein Innenvolumen von einigen Mikrolitern bis hin zu mehreren Litern möglich, bevorzugt 10 µl bis 0,1l, besonders bevorzugt 0,5 bis 5 cm³.

Bei der Probe im Inneren der Sorptionszelle kann es sich um einen beliebigen Feststoff, ein Gel oder eine Flüssigkeit handeln in dessen Volumen oder an dessen Oberfläche eine Reaktion erfolgt bzw. das eingeleitete Sorptionsgas sorbiert wird. Bei dem Sorptionsgas kann es sich um eine beliebige gasförmige Substanz handeln. Auch Aerosole, also flüssige oder feste Substanzen dispergiert in einem gasförmigen Medium, sind denkbar.

Die Referenzzelle ist zur Füllung mit dem Sorptionsgas über die Gasverbindung mit der Sorptionszelle verbunden. Bei der Messung kann die Referenzzelle nur das Sorptionsgas enthalten oder es besteht die Möglichkeit der zusätzlichen Befüllung mit einer Probe, wie es für die Sorptionszelle vorgesehen ist.

Um beide Messzellen ist jeweils ein Gasvolumen angeordnet, wobei bevorzugt große Teile der Sorptionszelle von dem Mess-Gasvolumen und große Teile der Referenzzelle von dem Referenz-Gasvolumen umgeben sind und besonders bevorzugt beide Messzellen von dem jeweiligen Gasvolumen - ggf. bis auf Zuleitungen - vollständig und allseitig umschlossen sind. Eine größtmögliche Umhüllung der Messzellen durch die Gasvolumina ist vorteilhaft, da so eine möglichst vollständige Übertragung der Wärme aus den Messzellen in die Gasvolumina gewährleistet ist.

In einer weiteren vorteilhaften Ausuhrungsform der Vorrichtung weichen die orthogonal zwischen allen Punkten der Oberfläche der jeweiligen Messzelle und der inneren Wand des entsprechenden Gasvolumens gemessenen Abstände um nicht mehr als 20 % voneinander ab, bevorzugt nicht mehr als 10%, besonders bevorzugt sind die Abstände zwischen den Wänden der Messzelle und des diese umgebenden Gasvolumens an allen Punkten gleich groß, sodass im Inneren des Gasvolumens es zu einem möglichst gleichmäßigen Wärmefluss kommt.

Erfindungsgemäß ist zwischen der Sorptionszelle und der Referenzzelle eine Gasverbindung vorgesehen. Dabei kann es sich um eine einfache Leitung aus einem beliebigen Material oder auch um ein weiteres Bauteil der Vorrichtung, das die Innenräume der beiden Messzellen direkt oder indirekt miteinander verbindet, handeln.

Des Weiteren umfasst die erfindungsgemäße Vorrichtung zwischen dem Mess-Gasvolumen und dem Referenz-Gasvolumen eine Vorrichtung zur Differenzdruck-Messung. Die Differenzdruck-Messung kann zum Beispiel mittels eines Differenzdrucksensors, etwa mit einer Trennmembran, oder mittels mehrerer Sensoren, etwa piezoresistiven, piezoelektrischen oder kapazitiven Drucksensoren, erfolgen.

Die Anordnung der Vorrichtung zur Differenzdruck-Messung an dem Mess-Gasvolumen und dem Referenz-Gasvolumen kann direkt oder über weitere Bauteile der Vorrichtung erfolgen. So kann beispielsweise diese auch mit einem Teil einer Vorrichtung zur Befüllung mit dem Referenzgas verbunden sein.

In einer vorteilhaften Weiterbildung der Erfindung sind die beiden Messzellen, die Sorptionszelle und die Referenzzelle, sowie die damit verbundenen Bauteile möglichst symmetrisch, bevorzugt spiegelsymmetrisch, zu einer Linie, die parallel zu einer Hauptachse der Messzellen und/oder mittig zwischen den beiden Messzellen verläuft und besonders bevorzugt zusätzlich durch den Mittelpunkt der Apparatur geht, angeordnet, wodurch die durch den zweizelligen Aufbau der Vorrichtung bedingte intrinsische Kompensation aller die Messung störender oder verfälschender Effekte durch ein ähnliches Umfeld der beiden Messzellen begünstig wird.

Nach einer besonders vorteilhaften Ausgestaltung der Erfindung ist je ein Heizelement mit Wirkungsbereich im Inneren der Sorptionszelle und der Referenzzelle vorgesehen. Bei dem Heizelement kann es sich um eine beliebige Vorrichtung zur gezielten Beheizung handeln, bevorzugt umfasst es ein elektrisches Widerstandselement wie ein PTC- oder NTC-Widerstand, besonders bevorzugt um ein metallisches Widerstandselement aus Platin, wie zum Beispiel einem PT100-Widerstandselement. Der Einbau von elektrischen Widerstandselementen in beiden Messzellen ist vorteilhaft aufgrund der Möglichkeit der in-situ-Kalibrierung des Kalorimeters während des Messvorgangs durch geregelte elektrische Beheizung der Widerstandselemente.

Gemäß dieser Ausgestaltung der Erfindung kann das Heizelement in die Wand der Messzellen integriert sein oder sich teilweise oder vollständig in das Innere der jeweiligen Messzelle erstrecken. In einer besonders vorteilhaften Weiterbildung der Erfindung ist das Heizelement thermisch gegenüber der Wand der jeweiligen Messzelle isoliert, so dass der Wärmeeintrag durch das Heizelement nur in das Innere der Messzelle, nicht aber direkt auf die Zellenwand erfolgt.

Bevorzugt befindet sich in jeder der beiden Messzellen, der Sorptionszelle und der Referenzzelle, ein baugleiches Heizelement.

Vorzugsweise ist das Heizelement zusätzlich auch zur Erfassung der Temperatur jeweils des Inneren der Sorptionszelle und der Referenzzelle verwendbar. Dies kann in einer möglichen Ausgestaltung der Erfindung ebenfalls über ein elektrisches und/oder metallisches Widerstandselement, wie zum Beispiel einem PT100 Widerstandselement erfolgen.

Weiterhin vorteilhaft ist, wenn die Heizelemente je in der Sorptionszelle und in der Referenzzelle über eine Steuereinheit getrennt voneinander regelbar sind, so dass ein geregelter kurzzeitiger Wärmeeintrag in jede der beiden Messzellen unabhängig voneinander erfolgen kann. Bevorzugt kann mittels der Steuereinheit ebenfalls die Temperatur in den Messzellen getrennt voneinander mittels des jeweiligen Heizelements gemessen werden, wodurch auch die Temperaturen zentral erfasst und sowohl in die Auswertung des Messsignals einbezogen werden kann, als auch Teil der vom Nutzer abrufbaren Daten darstellt.

Nach einer weiteren vorteilhaften Ausgestaltung der Erfindung ist vorgesehen, dass mittels der Steuereinheit eine Kalibrierung der Vorrichtung vor, während und/oder nach der kalorimetrischen Messung durchgeführt werden kann und dies besonders bevorzugt vollautomatisch erfolgt.

In einer vorteilhaften Weiterbildung des Verfahrens werden während der kalorimetrischen Vermessung einmalig, wiederholt oder kontinuierlich in-situ Kalibrierungen vorgenommen, wobei unter einer in-situ Kalibrierung eine Kalibrierung zumindest unter Messbedingungen, bevorzugt während des Messvorgangs, verstanden wird. Dabei erfolgt mittels einem der Heizelemente entweder in der Sorptionszelle oder in der Referenzzelle ein kurzzeitiger geregelter Wärmeeintrag, wodurch eine zusätzliche Druckdifferenz zwischen den die Messzellen umgebenden Gasvolumina beobachtet werden kann, die proportional zur eingebrachten Wärmemenge ist. Ein Vorteil dieser Kalibrierungen ist, dass so die aufgezeichnete Druckerhöhung nach der Messung direkt in eine absolute Wärmemenge umgerechnet werden kann. Dies ermöglicht eine direkte Bestimmung der Sorptionsenthalpien aus dem Wärmeumsatz, so dass Beschränkungen durch Modelle und Annahmen entfallen. Da diese Kalibrierung unter Messbedingung (u. a. Temperatur, Gasdruck, Atmosphäre) mit der Probe in der Sorptionszelle durchgeführt wird und während der Messung beliebig oft wiederholt werden kann, werden hierbei vorteilhaft alle die Messung störenden oder verfälschenden Effekte, ggf. auch in ihrer zeitlichen Entwicklung während der Messung, berücksichtigt, so zum Beispiel die (zeitliche) Änderung der Wärmekapazität der Atmosphäre in der Sorptionszelle.

In einer weiteren möglichen Weiterbildung des Verfahrens erfolgt vor oder während der kalorimetrischen Messung eine Kreuzkalibrierung zur Bestimmung gerätespezifischer Größen, wobei mittels jeweils eines Heizelementes abwechselnd eine kurzzeitige geregelte Beheizung der Sorptionszelle und der Referenzzelle durchgeführt wird, wodurch jeweils eine Druckdifferenz der die Messzellen umgebenden Gasvolumina auftritt, die proportional zur eingebrachten Wärmemenge ist und bei völliger Symmetrie der Vorrichtung für beiden Messzellen einen identischen Proportionalitätsfaktor aufweist. Ist die Vorrichtung nicht vollkommen symmetrisch, was zum einen apparativ bedingte Gründe basierend auf dem generellen Aufbau der Vorrichtung haben kann, aber auch in spezifischen Parametern der jeweiligen Messung, zum Beispiel durch Unterschiede in der Wärmekapazität des Inhalts beider Messzellen, begründet sein kann, so kann mittels der vorgenannten Weiterentwicklung des Verfahrens leicht und, falls gewünscht, automatisch ein jeweiliger Korrekturfaktor berechnet werden, dessen Berücksichtigung in der Auswertung des Messsignals zu deutlich genaueren und reproduzierbaren Ergebnissen führt. Bei bekanntem Symmetriefaktor reicht u. U. auch eine einfache Kalibrierung mit Wärmeeintrag in nur einer der Messzellen aus.

Des Weiteren besteht die Möglichkeit vor oder während der Messung mittels der Heizelemente zeitgleich in die Sorptionszelle und in die Referenzzelle ein kurzzeitiger geregelter gleichgroßer Wärmeeintrag einzubringen, der bei völliger Symmetrie des Kalorimeteraufbaus zu keiner Druckdifferenz der beiden Gasvolumina führen sollte. Eine dennoch auftretende Druckdifferenz kann ebenfalls zur Berechnung eines Korrekturfaktors in der Auswertung der kalorimetrischen Messung herangezogen werden, was zu genaueren Ergebnissen bei der Auswertung des erhaltenen Messsignals führt.

Alternativ oder zusätzlich zu einer Kalibrierung kann ein Heizelement, insbesondere ein in der Referenzzelle angeordnetes Heizelement, auch direkt zur Messung eingesetzt werden. Dies kann bspw. erfolgen, indem möglichst zeitgleich zur stattfindenden Sorptionsreaktion in der Messzelle ein Wärmeeintrag über das Heizelement in der Referenzzelle vorgegeben wird und mittels der Differenzdruck-Messung ein Vergleich der von den Messzellen in die Gasvolumina eingetragenen Wärmemengen erfolgt.

Insbesondere beim Erreichen eines Gleichgewichts, bspw. einem Differenzdruck von Null, d. h. gleichem Wärmeeintrag in beiden Gasvolumina, kann so die Wärmemenge in der Messzelle anhand der dem Heizelement vorgegebenen Wärmemenge bestimmt werden. In einer konkreten Ausgestaltung ist es bspw. möglich, einen Regler für die dem Heizelement zugeführte Wärmemenge vorzusehen, wobei der Differenzdruck auf Null geregelt wird. Die elektrisch zugeführte Heizleistung ist leicht ermittelbar und entspricht - direkt oder bei eventueller Asymmetrie ggf. modifiziert mit einem Faktor - dem Wärmebetrag der Sorptionsreaktion.

Bei einer möglichen Ausführungsform der Erfindung ist die Referenzzelle von im Wesentlichen gleicher Geometrie wie die Sorptionszelle und/oder das Referenz-Gasvolumen von im Wesentlichen gleicher Geometrie wie das Mess-Gasvolumen. Darunter ist zu verstehen, dass die Sorptionszelle und die Referenzzelle und/oder das Referenz-Gasvolumen und das Mess-Gasvolumen bevorzugt von vergleichbarer geometrische Gestalt sind und sich die Oberfläche beider Messzellen und/oder beider Gasvolumina nicht mehr als 100% voneinander unterscheiden, bevorzugt nicht mehr als 25%, besonders bevorzugt nicht mehr als 5%.

In einer ganz besonders vorteilhaften Weiterbildung der Erfindung sind die Sorptionszelle und die Referenzzelle und/oder das Referenz-Gasvolumen und das Mess-Gasvolumen in ihrer Form, Dimension und ihrem Material mindestens im Wesentlichen identisch, was eine größtmögliche Vergleichbarkeit der erhaltenen Daten und eine Minimierung notwendiger Korrekturen sicherstellt.

In einer möglichen Weiterbildung der Erfindung ist mindestens für die Sorptionszelle eine absperrbare Einlassvorrichtung vorgesehen, um die Sorptionszelle mit der Probe und/oder auch mit Sorptionsgas zu befüllen. Die Referenzzelle kann ebenfalls eine absperrbare Einlassvorrichtung besitzen, um zusätzlich oder gesondert zur Sorptionszelle Sorptionsgas oder in einer weiteren möglichen Weiterbildung der Erfindung auch eine Probe einbringen zu können. Die Absperrung der Einlassvorrichtung kann zum Beispiel über ein oder mehrere Ventile oder Schieber erfolgen, die manuell, elektrisch, pneumatisch oder anderweitig betrieben werden können, oder über einen verschraubbaren oder anderweitig verschließbaren Verschluss.

Weiterhin sind verschiedene Ausführungsformen der Erfindung möglich, bei denen eine Vorrichtung zur Messung des Sorptionsgas-Druckes zur Messung von Sorptionsisothermen vorgesehen ist. Dies kann über einen beliebigen Drucksensor erfolgen, zum Beispiel über einen piezoresistiven, piezoelektrischen, kapazitiven oder induktiven Drucksensor. Die Vorrichtung zur Messung des Sorptionsgas-Druckes kann sich an einem beliebigen, Sorptionsgas-gefüllten Bauteil der Vorrichtung zur kalorimetrischen Messung befinden, bevorzugt an der Gasverbindung zwischen der Sorptionszelle und der Referenzzelle oder an einer absperrbaren Einlassvorrichtung der Sorptionszelle oder der Referenzzelle. Durch eine solche Kopplung von volumetrisch arbeitenden Messverfahren mit der Kalorimetrie können die Sorptionsisotherme und die beladungsabhängigen Sorptionsenthalpien simultan in einem Gerät gemessen werden. Ein weitreichender Vorteil dieser Kopplung ist die direkte Bestimmung der Sorptionsenthalpien aus dem Wärmeumsatz während der Messung, so dass Beschränkungen durch Modelle und Annahmen entfallen.

Bei einer möglichen Ausführungsform der Erfindung ist eine absperrbare Leitung zur Verbindung des Inneren des Mess-Gasvolumens und des Referenz-Gasvolumens zum Herstellen eines Druckausgleichs zwischen den beiden Volumen vorgesehen. Die absperrbare Leitung kann dabei ein eigenständiges Bauteil der Vorrichtung sein oder über weitere in der Vorrichtung befindliche Bauteile realisiert sein, so etwa als Teil der Vorrichtung zur Differenzdruck-Messung oder als Teil der Vorrichtung zur Befüllung mit Referenzgas. Die Absperrung der Leitung kann zum Beispiel über ein oder mehrere Ventile oder Schieber erfolgen, die manuell, elektrisch, pneumatisch oder anderweitig betrieben werden können.

In einer vorteilhaften Ausführung des Verfahrens erfolgt während der kalorimetrischen Vermessung eine simultane Messung eine Sorptionsisotherme mittels einer in der Apparatur befindlichen Vorrichtung zur Messung des Sorptionsgas-Druckes oder einer extern angebrachten und mit der Sorptionszelle verbundenen Messvorrichtung, wodurch der zeitabhängige Verlauf des Sorptionsgas-Druckes verfolgt werden kann und somit unter Anderem Informationen zum zugrundeliegenden Sorptionsmechanismus erhalten werden. Des Weiteren wirkt sich bei dieser Ausführung vorteilhaft aus, dass die kalorimetrische Messung und die Aufnahme der Sorptionsisotherme mit nur einer Apparatur gleichzeitig durchgeführt werden können: Es ergibt sich eine Verringerung des zeitlichen und finanziellen Aufwandes, eine Reduzierung der Anzahl notwendiger Messgeräte was sowohl Platz als auch Wartungskosten spart sowie als größten Vorteil, dass die kalorimetrische Messung und die aufgenommene Sorptionsisotherme von demselben Prozess stammen und nicht von einer Reproduktion des gleichen Prozesses in einem weiteren Messgerät, wobei beide Messungen jeweils eigenen gerätespezifischen Parametern unterworfen wären.

Verschiedene Ausführungsbeispiele der Erfindung werden nachstehend mit Bezug auf die Zeichnungen näher erläutert. In den Zeichnungen zeigen:
- Fig. 1: eine schematische Darstellung einer ersten Ausführungsform der Erfindung;
- Fig. 2: eine schematische Darstellung einer zweiten Ausführungsform der Erfindung und
- Fig. 3: eine schematische Darstellung einer dritten Ausführungsform der Erfindung.

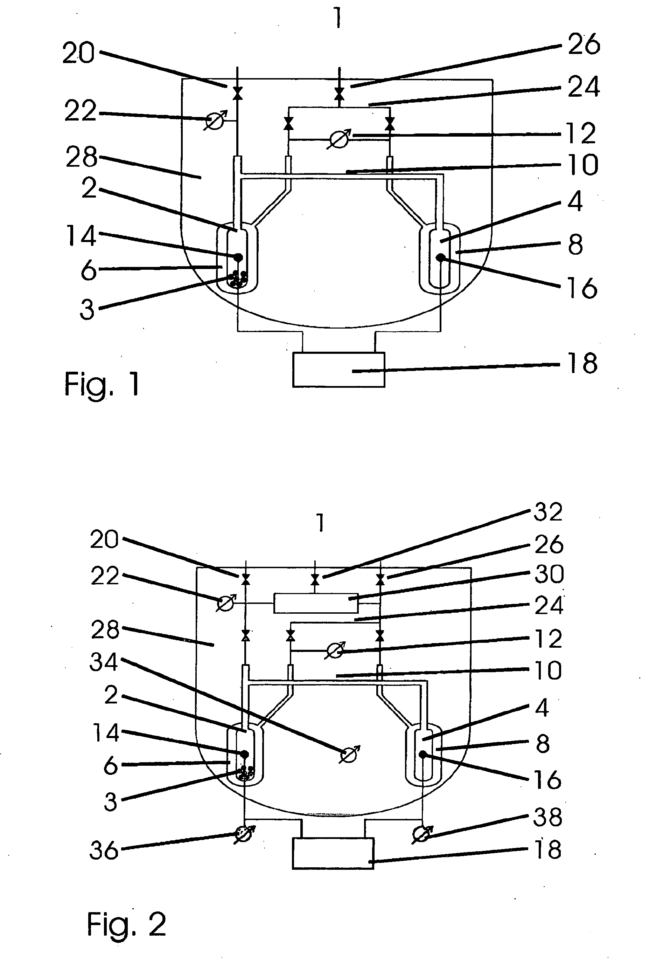

Die in Figur 1 gezeigte erste Ausführungsform einer Vorrichtung 1 zur kalorimetrischen Vermessung von Sorptionsvorgängen weist eine Sorptionszelle 2 zur Aufnahme einer Probe 3 sowie eine Referenzzelle 4 auf, wobei die Sorptionszelle 2 und die Referenzzelle 4 zueinander symmetrisch im Inneren der Vorrichtung 1 angeordnet sind.

Am oberen Ende der Sorptionszelle 2 und der Referenzzelle 4 ist jeweils eine Gasverbindung 10 angeordnet, die die Innenräume beider Messzellen 2, 4 verbindet, so dass in beide Messzellen 2, 4 zugleich Sorptionsgas eingeleitet werden kann und ein Druckausgleich der beiden Messzellen 2, 4 gegeben ist.

Die Einleitung des Sorptionsgases erfolgt über eine Zuleitung mit Absperrventil 20, die entlang der Hauptachse der Sorptionszelle 2 vom Inneren der Vorrichtung 1 nach Außen führt und oberhalb der Sorptionszelle 2 mit der Gasverbindung 10 verbunden ist. Das am oberen Ende der Zuleitung mit Absperrventil 20 angeordnete Ventil verschließt die Apparatur gasdicht und dient zur Befüllung der Sorptionszelle 2 und der Referenzzelle 4 mit Sorptionsgas. In der schematischen Darstellung von Fig. 1 nicht dargestellt ist ein Zugang, bspw. eine lösbare Rohrverbindung, durch die eine Probe 3 in die Sorptionszelle 2 eingebracht werden kann.

Der Druck des Sorptionsgases im Inneren der Sorptionszelle 2 und der Referenzzelle 4 wird mittels eines Präzisionsdruckaufnehmers 22 gemessen, der sich oberhalb der Sorptionszelle 2 verbunden mit der Zuleitung mit Absperrventil 20 im Inneren der Vorrichtung 1 befindet.

Die Sorptionszelle 2 ist - bis auf die Zuleitung - vollständig von einem Mess-Gasvolumen 6 umgeben, welches mit einem Referenzgas, z.B. Argon, gefüllt ist. Die Referenzzelle 4 ist von einem Referenz-Gasvolumen 8 umgeben, das ebenfalls mit dem Referenzgas gefüllt ist und in seiner Form identisch zum Mess-Gasvolumen 6 gestaltet ist. Im oberen Bereich beider Gasvolumina 6, 8 sind Leitungen angeordnet, die je zu einer Seite zu einem zwischen dem Mess-Gasvolumen 6 und dem Referenz-Gasvolumen 8 angeordneten Differenzdruck-Sensor 12 führen.

Verbunden mit den von den beiden Gasvolumina 6,8 zu dem Differenzdruck-Sensor 12 führenden Leitungen und parallel zu dem Differenzdruck-Sensor 12 angeordnet befindet sich eine weitere Leitung 24 mit zwei gasdichten Ventilen. Mittig zwischen diesen beiden Ventilen, direkt mit der Leitung 24 verbunden, ist eine Vorrichtung zur Befüllung mit Referenzgas 26 angeordnet, die in der in Fig. 1 skizzierten Ausführungsform der Vorrichtung 1 aus einer einfachen Leitung mit einem Ventil besteht. Mit Hilfe der Ventile der Vorrichtung zur Befüllung mit Referenzgas 26 sowie der an der Leitung 24 angeordneten zwei Ventile kann sowohl in eines oder beide der Gasvolumina 6, 8 Referenzgas eingeleitet werden, als auch ein Druckausgleich zwischen dem Mess-Gasvolumen 6 und dem Referenz-Gasvolumen 8 realisiert werden.

Jeweils mittig im Inneren der Sörptionszelle 2 und der Referenzzelle 4 befindet sich je ein Heizelement 14, 16 zur kurzfristigen Einbringung einer definierten Wärmemenge in das Innere der jeweiligen Messzelle 2, 4. Bei den hier dargestellten Heizelementen 14, 16 handelt es sich um elektrische Widerstandselemente, die jeweils mit einem Kabel verbunden sind, dass aus der Messzelle 2, 4 heraus durch das um diese herum angeordneten Gasvolumen 6, 8 zu einer außerhalb der Vorrichtung 1 befindlichen Steuereinheit 18 führt. Die Steueieinheit 18 regelt sowohl die Beheizung als auch die Erfassung der Temperatur des Inneren der Sorptionszelle 2 und der Referenzzelle 4 jeweils getrennt voneinander mittels der elektrischen Widerstandselemente 14, 16.

Sämtliche in Fig. 1 gezeigten Bauelemente der Vorrichtung 1 zur kalorimetrischen Vermessung von Sorptionsvorgängen, abgesehen von der Steuereinheit 18, befinden sich im Inneren eines isolierten, thermostatisierten Gefäßes 28, das die in seinem Inneren angeordneten Bauelemente der Vorrichtung 1 gegenüber der Umgebung thermisch isoliert.

Das Gefäß 28 kann zum Beispiel eine evakuiertes Vakuumgehäuse, ein flüssigkeitsgefülltes Gefäß, das mittels eines intern oder extern angeordneten Thermostaten geregelt temperiert wird, oder ein geeignetes Thermoisolationsgefäß sein.

Zur Durchführung einer kalorimetrischen Vermessung eines Sorptionsvorgangs wird zunächst eine Probe 3 in die Sorptionszelle 2 gefüllt.

Die Probe 3 wird zunächst für die Messung vorbereitet und dabei ggf. vorbehandelt. Dann wird das Volumen der Messzelle 2 und damit ebenfalls das Volumen der Referenzzelle 4 entweder mit einem definierten Gas bei festgelegtem Druck beaufschlagt oder - bevorzugt - evakuiert.

Anschließend erfolgt automatisch eine Kalibrierung. Diese kann bei bekanntem Asynchronitätsfaktor als einfache Kalibrierung erfolgen, bevorzugt ist aber eine Kreuzkalibrierung zur Bestimmung gerätespezifischer Größen, wobei mittels jeweils eines elektrischen Widerstandsheizelementes 14, 16 abwechselnd eine kurzzeitige geregelte Beheizung der Sorptionszelle 2 und der Referenzzelle 4 erfolgt, wodurch jeweils eine Druckdifferenz der die Messzellen 2, 4 umgebenden Gasvolumina 6, 8 auftritt, die proportional zur eingebrachten Wärmemenge ist und bei völliger Symmetrie der Vorrichtung für beiden Messzellen 2, 4 einen identischen Proportionalitätsfaktor aufweist. Ist die Vorrichtung 1 nicht vollkommen symmetrisch, was zum einen apparativ bedingte Gründe basierend auf dem generellen Aufbau der Vorrichtung 1 haben kann, aber auch in spezifischen Parametern der jeweiligen Messung, zum Beispiel durch Unterschiede in der Wärmekapazität des Inhalts beider Messzellen 2, 4, begründet sein kann, so kann mittels der Kreuzkalibrierung automatisch ein Korrekturfaktor berechnet werden, der bei der späteren Auswertung des Messsignals berücksichtigt wird.

Anschließend wird ein Sorptionsgas, dessen Sorption auf die Probe 3 kalorimetrisch untersucht werden soll, in die Sorptionszelle 2 und in eine mit dieser verbundene Referenzzelle 4 geleitet, so dass sich in der Sorptionszelle 2 eine Sorptionsreaktion mit der Probe 3 ergibt, worauf eine kalorimetrische Messung des Sorptionsvorgangs durchgeführt wird. Gegebenenfalls wird zu Beginn oder während der kalorimetrischen Messung eine weitere Kreuzkalibrierung gemäß dem zuvor beschriebenen Verfahren durchgeführt

Wird während der Messung in der Sorptionszelle 2 nun in Folge einer Sorption an die Probe 3 Wärme frei, so fließt diese in ein die Sorptionszelle 2 umgebendes Mess-Gasvolumen 6, wohingegen in der Referenzzelle 4 es zu keiner Sorption des Sorptionsgases kommt und folglich auch zu keinem sorptionsbedingten Wärmefluss in ein die Referenzzelle 4 umgebende Referenz-Gasvolumen 8. Der zusätzliche Wärmefluss in das Mess-Gasvolumen 6 führt zu einer vorübergehenden Erwärmung des Gases darin und damit zu einer Druckerhöhung, die im zeitlichen Verlauf zunächst steil ansteigt und danach langsam wieder abfällt bis schließlich das thermische Gleichgewicht im GesamtSystem wieder erreicht ist und keine Druckdifferenz beider Gasvolumina 6, 8 mehr registriert wird. Im Referenz-Gasvolumen 8 kommt es während des gesamten Prozesses zu keiner Druckerhöhung aufgrund des Sorptionsvorgangs. Die Druckerhöhung im Mess-Gasvolumen 6 wird mittels des Differenzdrucksensors 12 im Vergleich zum Druck im Referenz-Gasvolumen 8 gemessen. Die so ermittelte Druckdifferenz ist proportional zu der freiwerdenden Wärme während des Sorptionsvorgangs. Da sämtliche der Sorption nicht zugrunde liegenden Wärmeflüsse und Atmosphärenveränderungen nicht nur in der Sorptionszelle 2, sondern auch in der Referenzzelle 8 auftreten, sind solche Effekte bei dem auf dem Differenzdruck beider Zellen basierenden Verfahren intrinsisch vom erhaltenen Ergebnis ausgenommen.

Die Messung der Wärmemenge erfolgt anhand der Beobachtung des Peaks des sich ergebenden zeitlichen Verlaufs des Differenzdrucks, unter Verwendung der vorherigen oder nachträglichen Kalibrierung, aus der der Zusammenhang zwischen Differenzdruck und Wärmeeintrag bekannt ist. Dabei können während der kalorimetrischen Vermessung wiederholt oder kontinuierlich in-situ Kalibrierungen vorgenommen werden, wobei mittels einem der elektrischen Widerstandsheizelemente 14, 16 entweder in der Sorptionszelle 2 oder in der Referenzzelle 4 ein kurzzeitiger geregelter Wärmeeintrag erfolgt, wodurch eine zusätzliche Druckdifferenz zwischen den die Messzellen 2, 4 umgebenden Gasvolumina 6, 8 beobachtet werden kann, die proportional zur eingebrachten Wärmemenge ist, wodurch die aufgezeichnete Druckerhöhung nach der Messung direkt in eine absolute Wärmemenge umgerechnet werden kann.

Besonders bevorzugt ist eine mehrschrittige Messung mit aufeinanderfolgenden Messschritten bei jeweils schrittweise ansteigendem Druck des Sorptionsgases. Hierbei werden zunächst die Messzelle und die Referenzzelle evakuiert und dann eine erste Kalibrierung als Kreuzkalibrierung oder einfache Kalibrierung durchgeführt. Anschließend wird das Sorptionsgas in die Messzellen 2,4, auf einem definierten, niedrigen Druckniveau eingelassen und die beschriebene kalorimetrische Messung durch Beobachtung der Druckdifferenz durchgeführt. Wird nun abgewartet, bis sich nach Abklingen des anfänglichen Peaks wieder ein thermisch stabiler Zustand einstellt, so kann anschließend in diesem stabilen Zustand eine erneute in-situ Kalibrierung erfolgen. Die Besonderheit besteht dann darin, dass die Kalibrierung bei den exakten Messbedingungen möglich ist und so Fehlereinflüsse wie bspw. sich ändernde Wärmekapazitäten in der Kalibrierung berücksichtigt sind.

Anschließend wird in einem weiteren Messschritt weiteres Sorptionsgas zugeführt und die Messung auf einem zweiten, höheren Druckniveau wiederholt, inklusive der anschließenden Kalibrierung. Eine Fortführung mit weiteren Messschritten bei jeweils ansteigendem Druck ist möglich.

In Figur 2 ist eine weitere mögliche Ausführungsform einer Vorrichtung 1 zur kalorimetrischen Vermessung von Sorptionsvorgängen schematisch dargestellt. In den Grundelementen entspricht diese der in Fig. 1 gezeigten Ausführungsform, erweitert diese allerdings um eine Reihe von Bauelementen.

Gegenüber der in Fig. 1 dargestellten Ausführungsform ist die Vorrichtung 1 in Fig. 2 ergänzt durch einen Gasspeicherbehälter 30, der im oberen Teil der Vorrichtung 1 mit der Zuleitung mit Absperrventil 20 sowie der Vorrichtung zur Befüllung mit Referenzgas 26 verbunden ist. Der Druck im Inneren des Gasspeicherbehälters 30 ist über den mit diesem über eine Leitung verbundenen Präzisionsdruckaufnehmer 22 messbar.

Direkt an dem Gasspeicherbehälter 30 angeordnet befindet sich ein absperrbarer Zugang 32 mittels dem der Gasspeicherbehälter 30 sowohl evakuiert als auch befüllt werden kann. Der Gasspeicherbehälter kann sowohl über die Vorrichtung zur Befüllung mit Referenzgas 26 mit Referenzgas als auch über die Zuleitung mit Absperrventil 20 mit Sorptionsgas befüllt werden.

Sowohl die Leitung von dem Gasspeicherbehälter 30 zu der Sorptionszelle 2 als auch die Leitung von dem Gasspeicherbehälter 30 zu dem Mess-Gasvolumen 6 und dem Referenz-Gasvolumen 8 sind über Ventile absperrbar, wobei im zweiten Fall die Ventile Teil der absperrbaren Leitung 24 sind.

Der Gasspeicherbehälter 30 stellt in dieser Ausführungsform der Erfindung ein zentrales Bauteil dar mit dem alle drei Einlassvorrichtungen, die Vorrichtung zur Befüllung mit Referenzgas 26, die Zuleitung mit Absperrventil 20 und der absperrbarer Zugang 32, verbunden sind.

Weiterhin besitzt das in Fig. 2 gezeigte Ausführungsbeispiel eine Temperaturmessvorrichtung 34 im Inneren des adiabatischen Gefäßes 28 zur Erfassung der Temperatur eines darin befindlichen flüssigen oder gasförmigen Mediums.

Des Weiteren ist im Ausführungsbeispiel der Vorrichtung 1 in Fig. 2 mit jedem der beiden Heizelemente 14, 16, die im Inneren der Sorptionszelle 2 und der Referenzzelle 4 angeordnet sind, je eine Temperaturmessvorrichtung 36, 38 verbunden zur direkten Erfassung und Wiedergabe der Temperatur während des Messvorgangs.

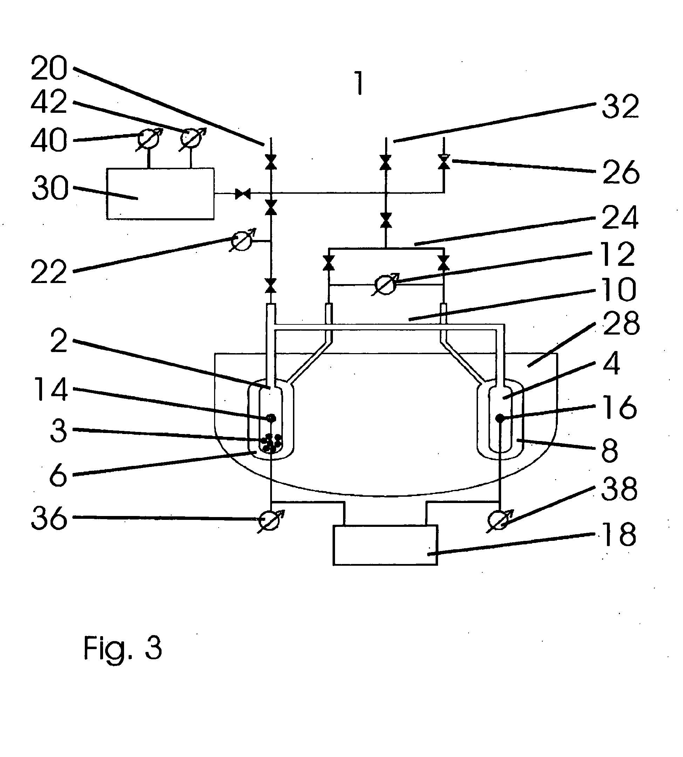

In Figur 3 ist eine dritte Ausführungsform der Erfindung dargestellt. In der nachfolgenden Beschreibung wird nur auf die Unterschiede zu der in Fig. 1 gezeigten Ausführungsform der Vorrichtung 1 eingegangen.

Die hier dargestellte Vorrichtung 1 zur kalorimetrischen Vermessung von Sorptionsvorgängen weist einen Gasspeicherbehälter 30 auf, der gegenüber dem Rest der Vorrichtung 1 mittels einer Leitung mit einem Ventil absperrbar verbunden ist. An dem Gasspeicherbehälter 30 angeordnet befinden sich eine Druckmessvorrichtung 40 und eine Temperaturmessvorrichtung 42 des Gasspeicherbehälters.

Über eine Leitung sind absperrbar mit dem Gasspeicherbehälter 30 die Zuleitung mit Absperrventil 20, die Vorrichtung zur Befüllung mit Referenzgas 26 und der absperrbarer Zugang 32 verbunden. Ausgehend von dieser Leitung führen zwei weitere absperrbare Leitungen zu der Sorptionszelle 2 und zu dem Mess-Gasvolumen 6 sowie zu dem Referenz-Gasvolumen 8.

Ein weiterer Unterschied zu den zuvor dargestellten Ausführungsformen bildet der Unfang des adiabatischen Gefäßes 28. Dieses umschließt in dieser Ausführungsform der Erfindung nicht mehr die gesamte Vorrichtung 1, sondern nur noch die Sorptionszelle 2 mit dem diese umgebenden Mess-Gasvolumen 6 sowie die Referenzzelle 4 mit dem diese umschließenden Referenz-Gasvolumen 8. Die Gasverbindung 10 zwischen den Gasvolumina 6,8, der Differenzdruck-Sensor 12, der Präzisionsdruckaufnehmer 22 und die absperrbare Leitung 24, sowie der Gasspeicherbehälter 30 befinden sich außerhalb des adiabatischen Gefäßes 28.

## Patentansprüche

1. Vorrichtung zur kalorimetrischen Vermessung von Sorptionsvorgängen mit
- einer Sorptionszelle (2) zur Aufnahme einer Probe (3), wobei die Sorptionszelle (2) ein Volumen zur Füllung mit einem Sorptionsgas aufweist,
- einer Referenzzelle (4) zur Füllung mit dem Sorptionsgas,
- ein Mess-Gasvolumen (6), das um die Sorptionszelle (2) herum angeordnet ist zur Aufnahme eines Referenzgases
- und ein ebenfalls zur Aufnahme des Referenzgases vorgesehenes Referenz-Gasvolumen (8), wobei das Referenz-Gasvolumen (8) um die Referenzzelle (4) herum angeordnet ist,
- wobei eine Gasverbindung (10) zwischen der Sorptionszelle (2) und der Referenzzelle (4) vorgesehen ist, um Sorptionsgas in die Sorptionszelle und die Referenzzelle zu leiten, so dass sich in der Sorptionszelle eine Sorptionsreaktion mit der Probe (3) ergibt,
- und wobei eine Vorrichtung zur Differenzdruck-Messung (12) zwischen dem Mess-Gasvolumen (6) und dem Referenz-Gasvolumen (8) vorgesehen ist, um aus einer Volumenänderung des Referenzgases im Mess-Gasvolumen (6) eine kalorimetrische Messung des Sorptionsvorgangs an der Probe (3) in der Sorptionszelle (2) durchzuführen.

2. Vorrichtung nach Anspruch 1, **dadurch gekennzeichnet, dass**
- je ein Heizelement (14, 16) vorgesehen ist, das jeweils einen Wirkungsbereich im Inneren der Sorptionszelle (2) und der Referenzzelle (4) hat.

3. Vorrichtung nach Anspruch 2, **dadurch gekennzeichnet, dass**
- das Heizelement (14, 16) mittels einer Steuereinheit (18) für die Sorptionszelle (2) und die Referenzzelle (4) getrennt voneinander regelbar ist.

4. Vorrichtung nach einem der Ansprüche 2 oder 3, **dadurch gekennzeichnet, dass**
- das Heizelement (14,16) zur Erfassung der Temperatur jeweils des Inneren der Sorptionszelle (2) und der Referenzzelle (4) verwendbar ist.

5. Vorrichtung nach einem der Ansprüche 2 - 4, **dadurch gekennzeichnet, dass**
- das Heizelement (14, 16) je ein elektrisches Widerstandselement in der Sorptionszelle (2) und der Referenzzelle (4) umfasst.

6. Vorrichtung nach Anspruch 3, **dadurch gekennzeichnet, dass**
- die Steuereinheit (18) zur Durchführung einer Kalibrierung vorgesehen ist,
- die mittels einer abwechselnden oder zeitgleichen kurzzeitigen geregelten Beheizung der Sorptionsielle (2) und/oder der Referenzzelle (4) mit Hilfe des jeweiligen Heizelementes (14,16) erfolgt.

7. Vorrichtung nach einem oder mehreren der vorangegangenen Ansprüche, **dadurch gekennzeichnet, dass**
- die Referenzzelle (4) von im Wesentlichen gleicher Geometrie wie die Sorptionszelle (2) ist.

8. Vorrichtung nach einem oder mehreren der vorangegangenen Ansprüche, **dadurch gekennzeichnet, dass**
- für die Sorptionszelle (2) und/oder die Referenzzelle (4) eine absperrbare Einlassvorrichtung (20) zur Befüllung vorgesehen ist.

9. Vorrichtung nach einem oder mehreren der vorangegangenen Ansprüche, **gekennzeichnet durch**
- eine Vorrichtung, die zur Messung des Sorptionsgas-Druckes (22) vorgesehen ist.

10. Vorrichtung nach einem oder mehreren der vorangegangenen Ansprüche, **dadurch gekennzeichnet, dass**
- das Referenz-Gasvolumen (8) von im Wesentlichen gleicher Geometrie wie das Mess-Gasvolumen (6) ist.

11. Vorrichtung nach einem oder mehreren der vorangegangenen Ansprüche, **dadurch gekennzeichnet, dass**
- eine absperrbare Leitung (24) zur Verbindung des Inneren des Mess-Gasvolumens (6) und des Referenz-Gasvolumens (8) vorgesehen ist zum Herstellen eines Druckausgleichs.

12. Verfahren zur kalorimetrischen Vermessung von Sorptionsvorgängen bei dem
- zunächst eine Probe (3) in eine Sorptionszelle (2) gefüllt wird,
- anschließend ein Sorptionsgas in die Sorptionszelle (2) und eine mit dieser verbundene Referenzzelle (4) geleitet wird, so dass sich in der Sorptionszelle (2) eine Sorptionsreaktion mit der Probe (3) ergibt,
- worauf eine kalorimetrische Messung des Sorptionsvorgangs durchgeführt wird, wobei die Druckdifferenz zweier jeweils die Sorptionszelle (2) und die Referenzzelle (4) umgebender Gasvolumina (6, 8) gemessen wird.

13. Verfahren nach Anspruch 12, **dadurch gekennzeichnet, dass**
- simultan eine Sorptionsisotherme mittels einer in der Apparatur befindlichen Vorrichtung zur Messung des Sorptionsgas-Druckes (22) oder einer extern angebrachten Messvorrichtung gemessen wird.

14. Verfahren nach Anspruch 12 oder 13, **dadurch gekennzeichnet, dass**
- vor oder während der kalorimetrischen Messung eine Kreuzkalibrierung zur Bestimmung gerätespezifischer Größen erfolgt, wobei
- mittels eines Heizelementes (14, 16) abwechselnd eine kurzzeitige geregelte Beheizung der Sorptionszelle (2) und der Referenzzelle (4) durchgeführt wird,
- wodurch jeweils eine Druckdifferenz der Referenz-Gasvolumen (6, 8) auftritt, die proportional zur eingebrachten Wärmemenge ist.

15. Verfahren nach Anspruch 12 oder 13, **dadurch gekennzeichnet, dass**
- während der kalorimetrischen Vermessung einmalig, wiederholt oder kontinuierlich in-situ Kalibrierungen vorgenommen werden, wobei
- entweder mittels eines Heizelementes (14, 16) in der Sorptionszelle (2) oder der Referenzzelle (4) eine kurzzeitige geregelte Beheizung erfolgt, wodurch eine zusätzliche Druckdifferenz zwischen den Gasvolumina (6, 8) beobachtet wird, die proportional zur eingebrachten elektrischen Wärmemenge ist oder
- mittels des Heizelementes (14, 16) zeitgleich in die Sorptionszelle (2) und in die Referenzzelle (4) ein kurzzeitiger geregelter gleichgroßer Wärmeeintrag erfolgt.

## Claims

1. A device for calorimetrically measuring sorption processes with
- a sorption cell (2) for receiving a sample (3), wherein the sorption cell (2) has a volume to be filled with a sorption gas,
- a reference cell (4) to be filled with the sorption gas,
- a measurement gas volume (6), which is arranged around the sorption cell (2) for receiving a reference gas
- and a reference gas volume (8) also provided for receiving the reference gas, wherein the reference gas volume (8) is arranged around the reference cell (4),
- wherein a gas connection (10) is provided between the sorption cell (2) and the reference cell (4) in order to guide sorption gas into the sorption cell and the reference cell so that a sorption reaction with the sample (3) results in the sorption cell,
- and wherein a device for measuring the pressure difference (12) between the measurement gas volume (6) and the reference gas volume (8) is provided in order to perform a calorimetric measurement of the sorption process on the sample (3) in the sorption cell (2) from a volume change in the reference gas in the measurement gas volume (6).

2. The device according to claim 1, **characterized in that**
- respectively one heating element (14, 16) is provided, which has respectively an effective zone inside the sorption cell (2) and the reference cell (4).

3. The device according to claim 2, **characterized in that**
- the heating element (14, 16) can be regulated separately by means of a control unit (18) for the sorption cell (2) and the reference cell (4).

4. The device according to one of claims 2 or 3, **characterized in that**
- the heating element (14, 16) can be used to record the temperature respectively of the inside of the sorption cell (2) and the reference cell (4).

5. The device according to one of claims 2 - 4, **characterized in that**
- the heating element (14, 16) comprises an electrical resistor element in the sorption cell (2) and the reference cell (4), respectively.

6. The device according to claim 3, **characterized in that**
- the control unit (18) is provided for performing a calibration,
- which takes place by means of an alternating or simultaneous short-term, regulated heating of the sorption cell (2) and/or the reference cell (4) with the help of the respective heating element (14, 16).

7. The device according to one or more of the preceding claims, **characterized in that**
- the reference cell (4) has especially the same geometry as the sorption cell (2).

8. The device according to one or more of the preceding claims, **characterized in that**
- a blockable intake device (20) is provided for filling of the sorption cell (2) and/or the reference cell (4).

9. The device according to one or more of the preceding claims, **characterized in that**
- a device for measuring the sorption gas pressure (22) is provided.

10. The device according to one or more of the preceding claims, **characterized in that**
- the reference gas volume (8) has especially the same geometry as the measurement gas volume (6).

11. The device according to one or more of the preceding claims, **characterized in that**
- a blockable line (24) for connecting the inside of the measurement gas volume (6) and the reference gas volume (8) is provided for equalizing the pressure.

12. A method for calorimetrically measuring sorption processes in which
- a sample (3) is first added to a sorption cell (2),
- a sorption gas is then directed into the sorption cell (2) and a reference cell (4) connected with it so that a sorption reaction with the sample (3) occurs in the sorption cell (2),
- whereupon a calorimetric measurement of the sorption process is performed, wherein the pressure difference of two gas volumes (6, 8) surrounding respectively the sorption cell (2) and the reference cell (4) is measured.

13. The method according to claim 12, **characterized in that**
- a sorption isotherm is simultaneously measured by means of a device located in the equipment for measuring the sorption gas pressure (22) or an externally attached measuring device.

14. The method according to claim 12 or 13, **characterized in that**
- a cross-calibration is performed before or during the calorimetric measurement for determining device-specific variables, wherein
- a short-term, regulated heating of the sorption cell (2) and the reference cell (4) is performed alternately by means of a heating element (14, 16),
- whereby respectively a pressure difference in the reference gas volumes (6, 8) occurs, which is proportional to the introduced heat quantity.

15. The method according to claim 12 or 13, **characterized in that**
- in-situ calibrations are performed once, repeatedly or continuously during the calorimetric measurement, wherein
- a short-term, regulated heating takes place either by means of a heating element (14, 16) in the sorption cell (2) or the reference cell (4), whereby an additional pressure difference is observed between the gas volumes (6, 8), which is proportional to the introduced electrical heat quantity or
- a short-term, regulated, same-sized heat input takes place simultaneously into the sorption cell (2) and into the reference cell (4) by means of the heating element (14, 16).

## Revendications

1. Dispositif de mesure calorimétrique de processus de sorption avec
- une cellule de sorption (2) pour le logement d'un échantillon (3), la cellule de sorption (2) présentant un volume destiné au remplissage avec un gaz de sorption,
- une cellule de référence (4) pour remplissage avec le gaz de sorption,
- un volume de gaz de mesure (6) disposé autour de la cellule de sorption (2) pour la réception d'un gaz de référence
- et un volume de gaz de référence (8) également prévu pour la réception du gaz de référence, le volume de gaz de référence (8) étant disposé autour de la cellule de référence (4),
- dans lequel une communication gazeuse (10) est prévue entre la cellule de sorption (2) et la cellule de référence (4) afin de conduire le gaz de sorption dans la cellule de sorption et la cellule de référence de manière à ce qu'il en résulte une réaction de sorption avec l'échantillon (3) dans la cellule de sorption,
- et dans lequel un dispositif de mesure de pression différentielle (12) est prévu entre le volume de gaz de mesure (6) et le volume de gaz de référence (8) afin de procéder à une mesure calorimétrique du processus de sorption sur l'échantillon (3) dans la cellule de sorption (2) sur la base d'un changement de volume du gaz de référence dans le volume de gaz de mesure (6).

2. Dispositif selon la revendication 1, **caractérisé en ce que**
- est chaque fois prévu un élément chauffant (14, 16) qui a respectivement un champ d'action à l'intérieur de la cellule de sorption (2) et de la cellule de référence (4).

3. Dispositif selon la revendication 2, **caractérisé en ce que**
- l'élément chauffant (14, 16) peut être réglé indépendamment au moyen d'une unité de commande (18) pour la cellule de sorption (2) et la cellule de référence (4).

4. Dispositif selon l'une quelconque des revendications 2 ou 3, **caractérisé en ce que**
- l'élément chauffant (14, 16) peut être utilisé pour l'enregistrement de la température, respectivement, de l'intérieur de la cellule de sorption (2) et de la cellule de référence (4).

5. Dispositif selon l'une quelconque des revendications 2-4, **caractérisé en ce que**
- l'élément chauffant (14, 16) comprend chaque fois un élément de résistance électrique dans la cellule de sorption (2) et la cellule de référence (4).

6. Dispositif selon la revendication 3, **caractérisé en ce que**
- l'unité de commande (18) est prévue pour l'exécution d'un calibrage
- qui se produit par chauffage régulé de courte durée alternatif ou simultané de la cellule de sorption (2) et/ou la cellule de référence (4) à l'aide de l'élément chauffant (14, 16) respectif.

7. Dispositif selon une ou plusieurs des revendications précédentes, **caractérisé en ce que**
- la cellule de référence (4) a essentiellement la même géométrie que la cellule de sorption (2).

8. Dispositif selon une ou plusieurs des revendications précédentes, **caractérisé en ce que**
- un dispositif d'admission blocable (20) de remplissage est prévu pour la cellule de sorption (2) et/ou la cellule de référence (4).

9. Dispositif selon une ou plusieurs des revendications précédentes, **caractérisé par**
- un dispositif prévu pour la mesure de la pression du gaz de sorption (22).

10. Dispositif selon une ou plusieurs des revendications précédentes, **caractérisé en ce que**
- le volume de gaz de référence (8) a essentiellement la même géométrie que le volume de gaz de mesure (6).

11. Dispositif selon une ou plusieurs des revendications précédentes, **caractérisé en ce que**
- un conduite blocable (24) est prévue pour le raccordement de l'intérieur du volume de gaz de mesure (6) et du volume de gaz de référence (8) afin d'établir une compensation de pression.

12. Procédé de mesure calorimétrique de processus de sorption dans lequel
- un échantillon (3) est tout d'abord empli dans une cellule de sorption (2),
- ensuite un gaz de sorption est conduit dans la cellule de sorption (2) et une cellule de référence (4) reliée à cette dernière de manière à ce qu'il en résulte une réaction de sorption avec l'échantillon (3) dans le cellule de sorption (2),
- ce après quoi une mesure calorimétrique du processus de sorption est réalisée, dans laquelle la différence de pression de deux volumes de gaz (6, 8) enveloppant respectivement la cellule de sorption (2) et la cellule de référence (4) est mesurée.

13. Procédé selon la revendication 12, **caractérisé en ce que**
- une isotherme de sorption est en même temps mesurée au moyen d'un dispositif de mesure de pression du gaz de sorption (22) se trouvant dans l'appareillage ou un dispositif de mesure monté à l'extérieur de ce dernier.

14. Procédé selon la revendication 12 ou 13, **caractérisé en ce que**
- avant ou pendant la mesure calorimétrique, une calibration croisée est réalisée afin de déterminer des grandeurs spécifiques à l'appareil, dans laquelle
- un chauffage régulé de courte durée alternatif de la cellule de sorption (2) et la cellule de référence (4) est exécuté au moyen d'un élément chauffant (14, 16),
- ce qui produit chaque fois une différence de pression des volumes de gaz de référence (6, 8) proportionnelle à la quantité de chaleur introduite.

15. Procédé selon la revendication 12 ou 13, **caractérisé en ce que**
- pendant la mesure calorimétrique, un calibrage est réalisé une fois, à plusieurs reprises ou continuellement sur place, dans lequel
- soit un chauffage régulé de courte durée est réalisé au moyen d'un élément chauffant (14, 16) dans la cellule de sorption (2) ou la cellule de référence (4), ce qui produit une différence de pression supplémentaire entre les volumes de gaz (6, 8) proportionnelle à la quantité de chaleur électrique introduite, soit
- une admission de chaleur régulée de courte durée de la même grandeur se produit au moyen de l'élément chauffant (14, 16) simultanément dans la cellule de sorption (2) et dans la cellule de référence (4).
